Europäisches Patentamt

European Patent Office

Office européen des brevets

(19)

(11) Veröffentlichungsnummer: **0 514 842 A1**

# (12) EUROPÄISCHE PATENTANMELDUNG

(21) Anmeldenummer: **92108443.0**

(22) Anmeldetag: **19.05.92**

(51) Int. Cl.5: **H01M 4/86**, H01M 4/88, H01M 8/12

---

(30) Priorität: **23.05.91 DE 4116734**

(43) Veröffentlichungstag der Anmeldung:
**25.11.92 Patentblatt 92/48**

(84) Benannte Vertragsstaaten:
**CH DE FR GB IT LI NL SE**

(71) Anmelder: **ABB PATENT GmbH
Kallstadter Strasse 1
W-6800 Mannheim 31(DE)**

(72) Erfinder: **Rohr, Franz Josef Dr.
Forstweg 2
W-6941 Abtsteinach(DE)**
Erfinder: **Reich, Andreas
Alstadter Strasse 55
W-6900 Heidelberg(DE)**

(74) Vertreter: **Rupprecht, Klaus, Dipl.-Ing. et al
c/o ABB Patent GmbH, Postfach 10 03 51
W-6800 Mannheim 1(DE)**

---

(54) **Elektrodenschicht für eine Brennstoffzelle und Verfahren zur Herstellung der Elektrodenschicht.**

(57) Die Erfindung bezieht sich auf eine gut haftende Brennstoffzellen-Luftelektrode, die auf Festelektrolyte oder keramische Trägerplatten aufgebracht werden kann. Zur Herstellung der Elektrodenschicht wird ein Mischoxid vom Typ $La_{1-x}A_xBO_3$ (A = Mg, Ca, Sr, Ba; B = Fe, Co, Ni, Mn, Cr; x = 0,1 bis 0,2) verwendet, dem jeweils 1 bis 10 Gew.-% Aluminiumoxid, Wismutoxid oder Chromoxid oder eine Kombination dieser Oxide oder eine Kombination dieser Oxide mit weiteren Oxiden zugesetzt sind.

EP 0 514 842 A1

Die Erfindung bezieht sich auf eine Elektrodenschicht auf dem Festelektrolyten einer keramischen Brennstoffzelle. Außerdem bezieht sich die Erfindung auf ein Verfahren zur Herstellung der Elektrodenschicht.

Aus der DE-OS 39 07 485 ist es bekannt, die Luftelektrode einer Hochtemperaturbrennstoffzelle aus einem elektrisch leitenden Mischoxid mit Perowskitstruktur, z.B. einem Mischoxid des Typs $La_{1-x}Sr_xMnO_3$ herzustellen. Dort ist außerdem beschrieben, daß solche Luftelektroden z.B. durch Plasmaspritzen auf z.B. rohr- oder scheibenförmigen Zirkonfestelektrolyten aufgebracht werden können. Das Aufbringen von Luftelektroden durch Plasmaspritzen ist jedoch mit erheblichen Schwierigkeiten verbunden, wenn auf dünnwandigen Zirkonoxid-Elektrolyten oder großflächigen Thermoschock-empfindlichen keramischen Substraten komplizierte Elektrodenflächen, d.h. maskierte bzw. nicht maskierte Bereiche herzustellen sind. Schwierig ist auch die Herstellung gleichmäßig dicker und poröser Elektrodenschichten, um eine kostengünstige Massenfertigung zu erzielen. In diesem Fall bieten Abscheideverfahren für Elektrodenmaterial durch Siebdruck und anschließendes Aufsintern der Schicht auf dem Festelektrolyten bzw. Substrat, wie in der DE-OS 39 07 485 ebenfalls beschrieben, wesentliche Vorteile. So hergestellte Luftelektroden aus $La_{1-x}Sr_xMnO_3$ zeigen jedoch im Vergleich zu plasmagespritzten Elektroden eine ungenügende Haftung auf der Festelektrolyt- bzw. Substratoberfläche.

Aus der US-PS 47 89 561 ist die Verwendung eines Mischoxids für die Elektrodenherstellung bekannt, dem sauerstoffionenleitende Oxide, wie dotiertes $ZrO_2$ oder Cerdioxid, also dem Festelektrolyten sehr ähnliche Oxide zur Verbesserung des Ladungsaustausches zwischen Elektroden und Elektrolyt zuzusetzen. Zur Verbesserung der Haftfestigkeit tragen diese Maßnahmen nicht bei.

Der Erfindung liegt die Aufgabe zugrunde, eine gut haftende Elektrodenschicht und wenigstens ein geeignetes Verfahren für die Herstellung solcher Elektrodenschichten anzugeben.

Der erste Teil der Aufgabe wird gelöst durch eine Elektrodenschicht auf einem Festelektrolyten einer keramischen Brennstoffzelle, wobei die Elektrodenschicht ein Mischoxid vom Typ $La_{1-x}A_xBO_3$ - (A = Mg, Ca, Sr, Ba; B = Fe, Co, Ni, Mn, Cr; x liegt im Bereich von 0,1 bis 0,2) enthält, und wobei dem Mischoxid Mengen von jeweils 1 bis 10 Gew.-% Aluminiumoxid, Wismutoxid oder Chromoxid oder eine Kombination dieser Oxide oder eine Kombination dieser Oxide mit weiteren Oxiden zugesetzt sind.

Besonders bewährt haben sich Elektrodenschichten, die hergestellt wurden mit einem Material folgender Ausgangszusammensetzung des Elektrodenmaterials und der oxidischen Zusätze: $La_{0,84}Sr_{0,16}MnO_3$ + 2% $Al_2O_3$ + 5% $Bi_2O_3$ + 2,5 $Cr_2O_3$. Die Zahlenangaben sind Molanteile bzw. Gewichtsprozente. Die Prozentwerte können zwischen 1 und 10% variiert werden.

Der zweite Teil der Aufgabe wird gelöst durch ein Verfahren zur Herstellung einer Elektrodenschicht auf einem keramischen Substrat in nachstehenden Verfahrensschritten:

a) Mischen der pulverförmigen Ausgangsstoffe $La_2O_3$ + $SrCO_3$ + $MnO_2$ im Molverhältnis 0,84:0,16:1 oder 0,85:0,15:1 und Zusetzen von 2% $Al_2O_3$ + 5% $Bi_2O_3$ + 2,5% $Cr_2O_3$

b) Erhitzen der Mischung auf etwa 1550°C zur Herstellung einer chemischen Verbindung durch Feststoffreaktion,

c) Mahlen des so hergestellten Elektrodenmaterials zu einem feinkörnigen Pulver mit einer Korngröße von weniger als 10 $\mu$m,

d) Herstellen einer Suspension oder einer Paste durch Beimischen organischer Lösungs- und Bindemittel zu dem gemahlenen Elektrodenmaterial,

e) Auftragen der Suspension oder der Paste, z.B. durch Tauchen, Sprühen oder Siebdruck auf das keramische Substrat und thermische Behandlung bei etwa 1350° bis 1450°C zur Herstellung einer festhaftenden Verbindung.

Das durch die Verfahrensschritte a) bis c) hergestellte feinkörnige Pulver kann auch vorteilhaft zur Herstellung plasmagespritzter Elektroden verwendet werden, wobei eine Korngröße des Pulvers bis 40 $\mu$m geeignet ist.

Die Elektrodenschichten können auf allen zur Herstellung von Brennstoffzellen oder von Brennstoffzellenanordnungen geeigneten keramischen Trägern, wie dünne Elektrolytscheiben oder dickwandige keramische Trägerplatten oder Trägerrohre aus dotiertem Zirkonoxid hergestellt werden. Die keramischen Träger können aus porösem oder aus gasdicht gesintertem Material bestehen. Dünne Elektrolytscheiben haben eine Dicke von etwa 0,05 bis 1 mm, typisch 0,05 bis 0,25 mm. Dicke keramische Träger sind etwa 0,5 bis 10 mm, bevorzugt 0,5 bis 2 mm dick. Weitere Einzelheiten zu keramischen Brennstoffzellen und bekannten Herstellverfahren sind der DE-OS 39 07 485 zu entnehmen, die insoweit zum Inhalt dieser Beschreibung gehört.

Das erfindungsgemäße Herstellverfahren führt zu Elektrodenschichten mit besonders guter Haftfestigkeit bei gleichzeitig guten elektrischen und elektrochemischen Elektrodeneigenschaften.

## Patentansprüche

1. Elektrodenschicht auf einem Festelektrolyten einer keramischen Brennstoffzelle, wobei die Elektrodenschicht ein Mischoxid vom Typ $La_{1-x}A_xBO_3$ (A = Mg, Ca, Sr, Ba; B = Fe, Co, Ni, Mn, Cr; x liegt im Bereich von 0,1 bis 0,2) enthält, dadurch gekennzeichnet, daß dem Mischoxid Mengen von jeweils 1 bis 10 Gew.-% Aluminiumoxid, Wismutoxid oder Chromoxid oder eine Kombination dieser Oxide oder eine Kombination dieser Oxide mit weiteren Oxiden zugesetzt sind.

2. Verfahren zur Herstellung einer Elektrodenschicht nach Anspruch 1, gekennzeichnet durch nachstehende Verfahrensschritte:

a) Mischen der pulverförmigen Ausgangsstoffe $La_2O_3$ + $SrCO_3$ + $MnO_2$ im Molverhältnis 0,84:0,16:1 oder 0,85:0,15:1 und Zusetzen von 2% $Al_2O_3$ + 5% $Bi_2O_3$ + 2,5% $Cr_2O_3$

b) Erhitzen der Mischung auf etwa 1550°C zur Herstellung einer chemischen Verbindung durch Feststoffreaktion,

c) Mahlen des so hergestellten Elektrodenmaterials zu einem feinkörnigen Pulver mit einer Korngröße von weniger als 10 $\mu$m,

d) Herstellen einer Suspension oder einer Paste durch Beimischen organischer Lösungs- und Bindemittel zu dem gemahlenen Elektrodenmaterial,

e) Auftragen der Suspension oder der Paste, z.B. durch Tauchen, Sprühen oder Siebdruck auf das keramische Substrat und thermische Behandlung bei etwa 1350° bis 1450°C zur Herstellung einer festhaftenden Verbindung.

3. Verfahren zur Herstellung einer Elektrodenschicht nach Anspruch 1, gekennzeichnet durch nachstehende Verfahrensschritte:

a) Mischen der pulverförmigen Ausgangsstoffe $La_2O_3$ + $SrCO_3$ + $MnO_2$ im Molverhältnis 0,84:0,16:1 oder 0,85:0,15:1 und Zusetzen von 2% $Al_2O_3$ + 5% $Bi_2O_3$ + 2,5% $Cr_2O_3$

b) Erhitzen der Mischung auf etwa 1550°C zur Herstellung einer chemischen Verbindung durch Feststoffreaktion,

c) Mahlen des so hergestellten Elektrodenmaterials zu einem feinkörnigen Pulver mit einer Korngröße von weniger als 40 $\mu$m,

d) Aufbringen des feinkörnigen Pulvers durch Plasmaspritzen auf das keramische Substrat.

4. Verfahren nach einem der Ansprüche 2 oder 3, dadurch gekennzeichnet, daß als keramisches Substrat eine etwa 0,05 bis 1 mm dicke Zirkonoxid-Elektrolytscheibe verwendet wird.

5. Verfahren nach Anspruch 2 oder 3, dadurch gekennzeichnet, daß als Substrat eine etwa 0,5 bis 10 mm dicke Trägerplatte oder ein entsprechendes Trägerrohr aus porösem dotierten Zirkonoxid verwendet wird.

| | **EINSCHLÄGIGE DOKUMENTE** | | EP 92108443.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
| A | EP - A - 0 414 575 (TONEN) * Ansprüche 1,5,14 * -- | 1,2 | H 01 M 4/86 H 01 M 4/88 H 01 M 8/12 |
| D,A | US - A - 4 789 561 (SCHÄEFER et al.) * Zusammenfassung * -- | 1,2 | |
| D,A | DE - A - 3 907 485 (ASEA BROWN BOVERI) * Ansprüche 4,8 * ---- | 1,2,4, 5 | |
| | | | RECHERCHIERTE SACHGEBIETE (Int. Cl⁵) |
| | | | H 01 M |
| | Der vorliegende Recherchenbericht wurde für alle Patentansprüche erstellt. | | |

| Recherchenort | Abschlußdatum der Recherche | Prüfer |
|---|---|---|
| WIEN | 19-08-1992 | LUX |